# EUROPÄISCHE PATENTANMELDUNG

(11) **EP 1 439 156 A1**
(43) Veröffentlichungstag der Anmeldung: **21.07.2004**
(21) Anmeldenummer: 03028905.2
(22) Anmeldetag: 17.12.2003
(51) Int. Cl.: C05F 17/02

(54) **Verfahren und Vorrichtung zur aeroben Umwandlung organischer Substanz**

(30) Priorität: 30.12.2002 DE 10261732
(71) Anmelder: Böhnensieker, Franz, 78253 Eigeltingen (DE)
(72) Erfinder: Böhnensieker, Franz, 78253 Eigeltingen (DE)
(74) Vertreter: Reinhardt, Harry

(57) **Zusammenfassung**

Bei einem Verfahren und einer Vorrichtung zur aeroben Umwandlung organischer Substanz wird eine organische Substanz nach Zerkleinern, Durchmischen, Umwälzen, Belüften unter Berücksichtigung und Kontrolle des Füllstands und der Temperatur in einem sich drehenden, ein Fördermittel einschließenden Reaktor umgesetzt. Der verwendete Reaktor ist eine schwenkbare und rotierende Hauptreaktortrommel (11), die über einen polygonalen, vorzugsweise quadratischen Innenquerschnitt verfügt. Die Umsetzung der organischen Substanz erfolgt unter Zufuhr von Frischluft, die durch Gegenstromführung mit der bei der Reaktion entstehenden Abluft vorgewärmt wird, nachdem sie mit Hilfe eines Trocknermoduls vorgetrocknet wurde. Die Hauptreaktortrommel (11) ist um eine Querachse (k-k) neigbar und umfasst einen schwimmend aufgehängten Zerkleinerungsquirl (20).

## Beschreibung

Die Erfindung betrifft eine Vorrichtung und ein Verfahren zur aeroben Umwandlung organischer Substanz nach dem Oberbegriff der Ansprüche 1 und 12.

Ein derartiges Verfahren und eine entsprechende Vorrichtung ist bereits aus der DE 38 37 865 C2 bekannt. Bei diesem Verfahren zur biologischen Umwandlung organischer Stoffe in Biomasse werden die organischen Stoffe zerkleinert und unter Frischluftzufuhr in einer Drehtrommel dadurch umgesetzt, dass sie im freien Fall durch den Reaktor fallen, nachdem sie von einem Fördermittel angehoben wurden. Aufgrund der gegebenen Geometrie lässt sich jedoch die Umsetzung der organischen Substanz nur begrenzt beschleunigen. Es handelt sich um eine immobile Anlage.

Die DE 92 01 356 erläutert eine Kompostiervorrichtung für kleinere Haushalte, bei der die diskontinuierliche Kompostierung in einer auf einem Gestell aufgebockten polygonalen Trommel erfolgt. Sie ist um ihre longitudinale Achse drehbar und arbeitet mit Wärmeerzeugungsmitteln.

Auch in der US 3,87,810 wird eine immobile auf einem Gestell aufgebockte, polygonale, drehbare Kompostiertrommel gezeigt; das umzusetzende Gut wird hier befeuchtet statt es zu erwärmen.

Ausgehend von diesem Stand der Technik liegt der vorliegenden Erfindung die Aufgabe zu Grunde, ein Verfahren und eine Vorrichtung zu schaffen, mit dem sich organische Substanz kontrolliert einer beschleunigten Umsetzung bzw. Umwandlung zu einem Wertstoff zuführen lässt.

Diese Aufgabe wird durch eine Vorrichtung und ein Verfahren zur aeroben Umwandlung organischer Substanz mit den Merkmalen der Ansprüche 1 und 12 gelöst.

Das Verfahren zur aeroben Umwandlung organischer Substanz umfasst das Zerkleinern, das Durchmischen, Umwälzen, Belüften, sowie die Berücksichtigung und die Kontrolle des Füllstands, sowie ebenfalls die Kontrolle der Temperatur der umzusetzenden Substanz in einem sich drehenden, ein Fördermittel einschließenden Reaktor. Bei dem Reaktor handelt es sich um wenigstens eine um ihre longitudinale Achse dreh- sowie um ihre transversale Achse schwenk- oder neigbare Hauptreaktortrommel, die einen polygonalen, vorzugsweise einen quadratischen Innenquerschnitt aufweist. Zunächst wird die organische Substanz auf geeignete Weise zerkleinert, da die Umsetzung umso rascher erfolgt, je kleiner das Gut ist. Hierzu wird das Gut durch einen in der Hauptreaktortrommel schwimmend aufgehängter Zerkleinerungsquirl zerkleinert.

Der Quirl ist vorzugsweise so beschaffen, dass er über einen inneren Hohlraum verfügt, durch den Luft strömen und über an den Quirlflügeln seitlich angeordneten Luftaustrittslöchern in die organische Substanz austreten kann. Die Luft ist vorzugsweise Frischluft, die vorgetrocknet und daher besonders wasserarm ist, was den O-xidationsprozess fördert. Die Frischluft wird bei der Abfuhr der verbrauchten und feuchtigkeitshaltigen Luft des Prozesses im Wärmeaustausch mit der Abluft temperiert.

Bei mehreren Trommelabschnitten kann der Quirl, wenn er in einem Abschnitt des Reaktors benötigt wird, in dem Substanz vorliegt, die sich z. B. schon in fortgeschrittenem Umsatzzustand befindet und die erneut mit Sauerstoff versorgt werden muss, in diesen Abschnitt der Reaktortrommel überführt oder geschwenkt werden.

Weitere Vorteile ergeben sich aus den Unteransprüchen.

Die Erfindung wird an Hand der folgenden Figuren näher erläutert. Es zeigen:
- Figur 1: Ein Schema des Verfahrensablaufs,
- Figur 2: eine schematische, perspektivische Ansicht einer mobilen Umwandlungsvorrichtung in einer bevorzugten Ausführungsform.

Das in Figur 2 gezeigte Ausführungsbeispiel zeigt eine Vorrichtung, wie sie zur aeroben Umwandlung von organischer Substanz eingesetzt wird. Die Hauptkomponente besteht aus wenigstens einem Reaktor, welcher ein Fördermittel zum Transport der umzusetzenden Substanz beinhaltet. Der Reaktor selbst ist eine um ihre Längsachse I-I drehbare Hauptreaktortrommel 11, die um eine ihrer Querachsen k-k gekippt, respektive geneigt werden kann. Zunächst wird mit Hilfe einer Aufnahme- oder Zuführeinheit 16, vorzugsweise einer Pick-Up-Trommel, das umzuwandelnde Gut aufgenommen, um damit die Hauptreaktortrommel 11 zu beschicken. Um die Oberfläche der umzusetzenden Partikel möglichst groß zu gestalten und damit möglicht rasch eine große Umsetzung zu erzielen, wird die Substanz vorzerkleinert. Auf dem Transportweg hin zur Hauptreaktortrommel 11 passiert das Gut ein erstes Zerkleinerungsmittel, in diesem Fall ein Dreifach-Zerkleinerungswerk 18. Es besteht aus drei einander nachgeschalteten Einzeltrommeln, die als Schneidetrommeln gestaltet sind. Diese Einzeltrommeln laufen verzahnt ineinander. Nichtorganische Substanz, die auch nicht zerkleinert werden kann, wird durch das Passieren der Aufnahmeund Zuführeinheit 16 und des Zerkleinerungsmittels aussortiert und kann von einer zeichnerisch nicht dargestellten Auffangvorrichtung aufgenommen werden. Die gezeigten Einzeltrommeln laufen mit von Trommel zu Trommel sich steigernden Drehzahlen. Das beschleunigte Rotieren der Trommeln bewirkt einen verbesserten Reinigungseffekt des umzusetzenden Gutes. Die Verzahnung der Trommeln einerseits und die Drehzahldifferenzen andererseits bewirken eine hohe Selbstreinigung des umzusetzenden Guts.

Die Hauptreaktortrommel 11 hat einen quadratischen Innenquerschnitt. Sie kann aber auch einen anders geformten polygonalen Innenquerschnitt haben. Sie ist um ihre Längsachse drehbar und kann rotieren. Zusätzlich kann sie gekippt werden, so dass die umzusetzende Substanz beim Kippvorgang allein durch die Schwerkraft einer Umwälzung unterliegt. Durch den polygonalen oder quadratischen Innenquerschnitt, wird beim Drehen der Hauptreaktortrommel 11 ein Abblättern der sich vor allem in den Ecken des Polygons ansammelnden Substanz von der Innenwandung der Trommel bewirkt und somit den Transport der Substanz von der Wandung hin zur Mitte bzw. hin zur Längsachse der Hauptreaktortrommel unterstützt, wobei die Durchmischung und Belüftung der Substanz optimiert wird.

Im Ausführungsbeispiel ist eine einteilige Hauptreaktortrommel 11 dargestellt. Um den Durchsatz weiter zu beschleunigen, können aber auch hintereinander entlang der Längsachse der Trommel mehrere voneinander getrennte Abschnitte vorgesehen sein, so dass in einem Abschnitt bereits eine Vorbereitung des Guts für den folgenden Abschnitt erfolgt, während dieser noch mit bereits weiter umgesetzten Gut bestückt ist. Eine kontinuierliche Umsetzung wird hierdurch ermöglicht.

In der Hauptreaktortrommel 11 ist ein Zerkleinerungsquirl 20 schwimmend aufgehängt, so dass er seine Position bei Rotation der Hauptreaktortrommel 11 im Wesentlichen beibehält. Dazu kann der Zerkleinerungsquirl 20 z.B. mittels Rollen im mittleren Bereich gelagert sein. Der Zerkleinerungsquirl 20 besteht aus einem Hohlstab, an dessen Enden sich Flügel befinden, die zum Zerkleinern des Guts geeignet sind. Durch einen zentral angeordneten Innenhohlraum im Quirl kann Luft durch den Stab hin zu dem Ende befördert werden, an dem die Flügel sind. Durch die an den Flügeln seitlich angeordneten Luftaustrittslöcher 21 kann die am Quirlstab eintretende Luft in das zerkleinerte Gut gelangen. Hierdurch wird die zu verarbeitende Substanz mit Luft angereicht. Diese Luft ist notwendig, um durch den beinhalteten Sauerstoff Oxidationsprozesse in Gang zu setzen, die die Zersetzung der organischen Substanz bewirken. Daher ist es durchaus sinnvoll, dass die Luft verstärkt mit Sauerstoff angereichert wird. Besitzt die Hauptreaktortrommel 11 mehrere Abschnitte, so kann der Zerkleinerungsquirl 20 auch so gelagert werden, dass er wechselweise in verschiedenen Abschnitten des Reaktors arbeitet. Hierzu kann er z.B. schwenkbar, vorzugsweise im Mittelbereich gelagert sein.

Die Halterung, in welcher der Quirl verankert ist, muss zur Versorgung des Quirls mit einer Luftzuführleitung versehen sein. Die Einheit aus Luftzuführleitung und Quirl stellt einen Luftzuführkopf 22 dar. Gegenüber dem Zerkleinerungsquirl 20, und somit auch gegenüber dem Luftzuführkopf 22, befindet sich ein Absaugkopf 14. Bei der Umwandlung organischer Substanz mit Luft kommt es zu Gär- und Verwesungs- bzw. Verrottungsprozessen. Diese Verrottungsprozesse bewirken die Entstehung von Gasen, die auch als Abluft 13 im Prozess bezeichnet werden können. Diese sauerstoffarme Abluft muss dem Prozess entnommen werden. Statt der sauerstoffarmen Abluft, die über den Absaugkopf 14 dem Prozess entnommen wird, wird an anderer Stelle, möglichst weit von der Entnahmestelle entfernt, sauerstoffreiche Frischluft zugeführt. Da die im Prozess entstehende Abluft auch eine höhere Temperatur hat und insofern dazu neigt nach oben zu steigen, ist der Absaugkopf 14 am höchstgelegenen Punkt der Hauptreaktortrommel 11, jedoch außerhalb der Hauptreaktortrommel positioniert.

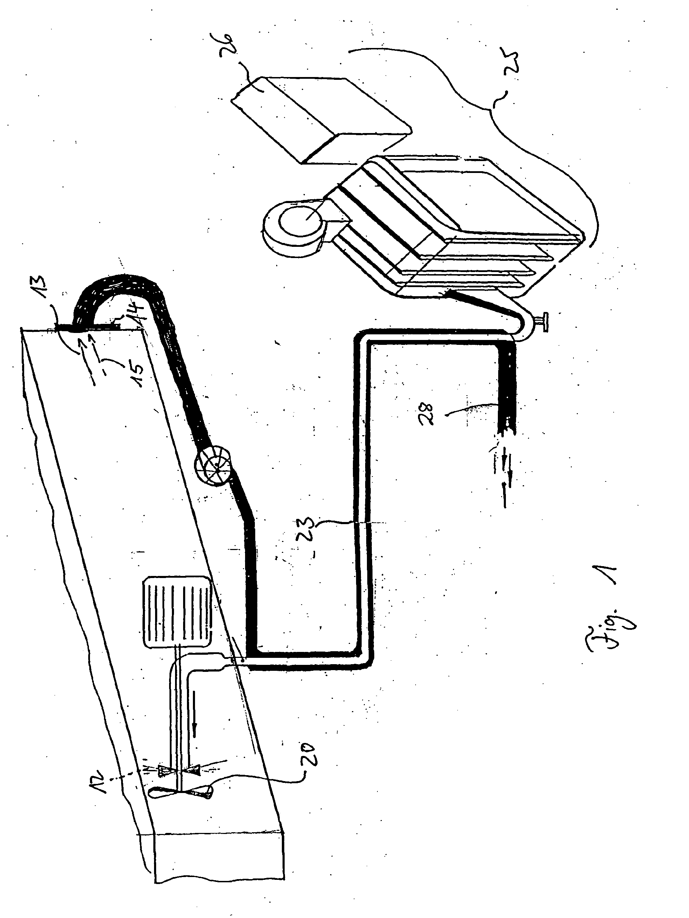

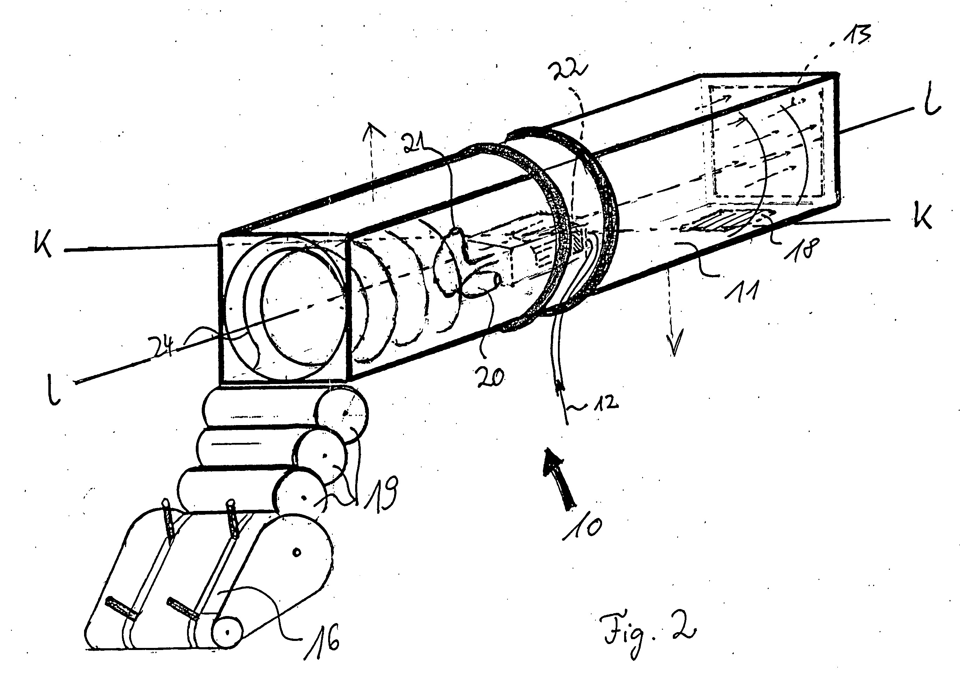

Wie in Figur 1 schematisch angedeutet, strömt die Abluft 13 über den Absaugkopf 14 durch ein Abluftabführrohr 28 im Gegenstrom mit der zuzuführenden Frischluft 12 über ein Doppelmantelrohr 23 zu einem Kondensator. Die Gegenstromführung bewirkt, dass die zugeführte Frischluft wärmer und somit energiereicher bzw. aktiver ist. Die dem System zugeführte Frischluft 12 wird in einem Trocknermodul 25 vorgetrocknet. Dieses Trocknermodul beinhaltet eine Verdampfereinheit 26 sowie eine Vakuumpumpe 27. Die Verdampfereinheit 26 besteht im Ausführungsbeispiel aus einem Zeolithblock und einer Kühlflüssigkeit. Beide sind in einem druckdichten Gehäuse untergebracht. Ein geeignetes Kühlflüssigkeitsgemisch kann mit Hilfe dieser Verdampfereinheit verdampft werden, wobei die benötigte Verdampfungswärme aus der Abluft des Reaktors stammt, wodurch die Kondensation der in der Abluft enthaltenen Feuchtigkeit bewirkt wird. Alternative Ausführungsformen sind dem Fachmann geläufig.

Gemäß Figur 2 erfolgt der Transport der umzuwandelnden Substanz von dem Ende der Hauptreaktortrommel 11, an dem diese beschickt wird, bis zum entgegengesetzt gelegenen Ende der Hauptreaktortrommel 11 mit Hilfe einer Innenschneckenwendel 24, die mit dem Hauptreaktor 11 hier fest verbunden ist. Diese feste Verbindung ist nicht erforderlich, sofern nur eine Förderung der Substanz durch ein Fördermittel gewährleistet ist.

Zur weiteren Umsatzbeschleunigung ist es nötig, die Substanz in der Hauptreaktortrommel 11 umzuschichten, so dass die gewünschte Umsetzung rasch und kontinuierlich erfolgt. Um dies zu fördern, ist der Neigungswinkel der Hauptreaktortrommel 11 so veränderbar, dass die beiden Enden der Hauptreaktortrommel wechselweise hoch oder tief zu liegen kommen. Außer der hierdurch wirkenden Schwerkraft und der damit verbundenen Umwälzung von oben nach unten soll auch eine zentripetale Durchmischung erzielt werden. Diese wird erreicht durch den polygonalen oder quadratischen Innenquerschnitt, welcher beim Drehen der Hauptreaktortrommel 11 ein Abblättern der sich vor allem in den Ecken des Polygon ansammelnden Substanz von der Innenwandung bewirkt und somit für den Transport der Substanz von der Wandung hin zur Mitte bzw. hin zur Längsachse der Hauptreaktortrommel sorgt. Eine überlagemde Wirkung zur entlang der longitudinalen Achse gewünschten Durchmischung und gleichzeitig zur Realisierung eines kontinuierlichen Umsatzprozesses wird erzielt, indem als Fördermittel eine Innenschneckenwendel 24 eingesetzt wird. Mit Hilfe dieses Fördermittels wird die umzusetzende Substanz jeweils vom tiefer gelegenen zum höher gelegenen Ende der Hauptreaktortrommel befördert. Am oberen Ende angelangt, fällt die umzusetzende Substanz wieder herab zum tiefer gelegenen Ende.
So wird durch die Innenschneckenwendel 24 und den quadratischen Innenquerschnitt der Hauptreaktortrommel 11 eine optimale longitudinale und transversale Durchmischung der Substanz bewirkt. Somit wird das jeweils am oben liegenden Ende der Innenschneckenwendel befindliche Material von dieser abgelöst und gelangt durch die Wirkung der Schwerkraft wieder an das tiefer gelegene Ende der Hauptreaktortrommel 11, von wo es umgehend wieder nach oben gefördert und dabei umgewendet wird. Eine weitere Beschleunigung des Umwandlungsprozesses der organischen Substanz lässt sich durch den Einsatz besonderer geeigneter Bakterienkulturen bewirken, mit denen der Reaktor beaufschlagt werden kann.

Um einen kontinuierlichen Betrieb zu gewährleisten, ist die Reaktortrommel z.B. in der Mitte geteilt und kann somit in zwei Drehrichtungen oder mit unterschiedlichen Drehzahlen betrieben werden. Das zu behandelnde Material kann demzufolge bei gleicher Schneckenwindung in zwei Förderströme aufgeteilt werden. Der eine Strom wird als fertig behandeltes Gut hinausgefördert und zur Weiterverarbeitung z.B. zum nachgeschalteten Pelletierer transportiert. Vorzugsweise ruht die andere Hälfte der Reaktortrommel während dieser Phase. Die Reaktortrommel kann dabei in eine horizontale Lage geschwenkt werden. Nach dieser Phase werden die Drehrichtungen wieder vorzugsweise in Gleichlauf gebracht und neues Material kann zugeführt werden. Dieses neue Material vermischt sich dann sehr schnell und intensiv mit der Bakterienkultur des noch verbliebenen Materials und nimmt auch schnell dessen Temperatur an.

Wenn der gewünschte Umsatzgrad erreicht ist, kann das Material dem Reaktor mit Hilfe einer Auslassvorrichtung 18 entnommen werden. Anschließend ist eine weitere Verarbeitung der Substanz denkbar, so können beispielsweise Pellets gepresst werden, die über einen sehr hohen Heizwert verfügen. Überschlägige Berechnungen haben ergeben, dass der Energiegehalt von einem Kilo umgesetztem Material bei etwa 4.000 Kilokalorien liegt, wohingegen ein Kilogramm Dieselkraftstoff über 13.000 Kilokalorien verfügt. Damit wird deutlich, dass mit etwa drei Kilogramm organischem Abfall ein Energiebetrag freigesetzt werden kann, wie er einem Kilo Dieselkraftstoff entspricht, somit stellt das letztlich aus einem Abfallstoff hergestellte Produkt eine echte Alternative zu einem nichterneuerbaren Kraftstoff dar. Der Prozess lässt sich in einer stationären, vorzugsweise aber in einer mobilen Anlage durchführen.

### Liste der Bezugszeichen

- 10: mobile Anlage
- 11: Hauptreaktortrommel
- 12: Frischluft
- 13: Abluft
- 14: Absaugkopf
- 15: Abwärme
- 16: Aufnahme und/oder Zuführeinheit
- 17: Zerkleinerungswerk
- 18: Auslassvorrichtung
- 19: Dreifachzerkleinerungswerk
- 20: Zerkleinerungsquirl
- 21: Luftaustrittslöcher
- 22: Luftzuführkopf
- 23: Doppelmantelrohr
- 24: Innenschneckenwendel
- 25: Trockner-Modul
- 26: Verdampfereinheit
- 27: Vakuumpumpe
- 28: Abluftabführrohr
- k-k: Querachse
- I-I: Längsachse

## Patentansprüche

1. Vorrichtung zur aeroben Umwandlung organischer Substanz, mit
- einer Aufnahme- und/oder Zuführeinheit (16),
- wenigstens einem Zerkleinerungsmittel,
- wenigstens einem um seine Längsachse (I-I) drehbaren Reaktor, der aus einer wenigstens einen Abschnitt umfassenden Hauptreaktortrommel (11) besteht, die einen polygonalen, vorzugsweise jedoch quadratischen Innenquerschnitt aufweist,
- einem Fördermittel zum Transport der umzusetzenden Substanz in wenigstens einem Abschnitt,
- und mit einer Auslassvorrichtung (18),
**dadurch gekennzeichnet, dass** die Hauptreaktortrommel (11) um eine Querachse (k-k) neigbar ist und einen schwimmend aufgehängten Zerkleinerungsquirl (20) umfasst.

2. Vorrichtung nach Anspruch 1, **dadurch gekennzeichnet, dass** die Hauptreaktortrommel (11) mehrere Abschnitte aufweist und dass der Zerkleinerungsquirl (20) in einzelne Abschnitte überführbar ist.

3. Vorrichtung nach einem der vorstehenden Ansprüche, **dadurch gekennzeichnet, dass** der Zerkleinerungsquirl (20) mit wenigstens einem zentral angeordneten Innenhohlraum zur Zuführung von Luft, vorzugsweise von vorgetrockneter Luft, und seitlich angeordneten Luftaustrittslöchern (21) versehen ist.

4. Vorrichtung nach einem der vorstehenden Ansprüche, **dadurch gekennzeichnet, dass** die Aufnahme- und Zuführeinheit (16) eine Pick-Up-Trommel umfasst.

5. Vorrichtung nach einem der vorstehenden Ansprüche, **dadurch gekennzeichnet, dass** ein weiteres Zerkleinerungsmittel aus wenigstens einer, vorzugsweise jedoch aus drei einander nachgeschalteten Einzeltrommeln besteht, die als Schneidetrommeln ausgebildet sind und der Hauptreaktortrommel vorgelagert sind.

6. Vorrichtung nach Anspruch 5, **dadurch gekennzeichnet, dass** die vorzugsweise verzahnt ineinander laufenden Einzeltrommeln mit sich ändernden, vorzugsweise mit sich von Trommel zu Trommel steigernden Drehzahlen laufen.

7. Vorrichtung nach einem der vorstehenden Ansprüche, **dadurch gekennzeichnet, dass** die Hauptreaktortrommel (11) einen schwimmend aufgehängten Luftzuführkopf (22) umfasst, der vorzugsweise gegenüber einem Absaugkopf (14) angeordnet ist.

8. Vorrichtung nach Anspruch 7, **dadurch gekennzeichnet, dass** Luftzuführkopf (22) und Zerkleinerungsquirl (20) eine Einheit bilden.

9. Vorrichtung nach Anspruch 7, **dadurch gekennzeichnet, dass** der Absaugkopf (14) gegenüber dem Zerkleinerungsquirl (20) am in geneigten Zustand der Hauptreaktortrommel (11) höchstgelegenen Punkt außerhalb der Hauptreaktortrommel positioniert ist.

10. Vorrichtung nach einem der vorstehenden Ansprüche, **dadurch gekennzeichnet, dass** eine Gegenstromführung für die zugeführte Luft durch ein Doppelmantelrohr (23) gebildet ist.

11. Vorrichtung nach einem der vorstehenden Ansprüche, **dadurch gekennzeichnet, dass** das Fördermittel eine mit der Hauptreaktortrommel (11) verbundene Innenschneckenwendel (24) ist.

12. Verfahren zur aeroben Umwandlung organischer Substanz, mit den Schritten Zerkleinern, Durchmischen, Umwälzen und Belüften, unter Berücksichtigung und Kontrolle des Füllstandes und der Temperatur der umzusetzenden Substanz in wenigstens einem sich um seine Längsachse (I-I) drehenden, ein Fördermittel einschließenden Reaktor, der wenigstens eine schwenkbare Hauptreaktortrommel (11) mit polygonalem, vorzugsweise jedoch quadratischem Innenquerschnitt aufweist, **dadurch gekennzeichnet, dass** die Hauptreaktortrommel (11) um eine Querachse (k-k) geneigt wird, wobei die im Reaktor befindliche Substanz in der Hauptreaktortrommel (11) zumindest zeitweise durch einen schwimmend aufgehängten Zerkleinerungsquirl (20) zerkleinert und gequirlt wird.

13. Verfahren nach Anspruch 12, **dadurch gekennzeichnet, dass** durch das Neigen der Hauptreaktortrommel (11) das unterhalb der Kippachse (k-k) liegende Ende oberhalb der Kippachse (k-k) zu liegen kommt und umgekehrt.

14. Verfahren nach Anspruch 12 oder 13, **dadurch gekennzeichnet, dass** die umzusetzende Substanz entlang der Längsachse (I-I) von dem tiefer gelegenen zu dem höher gelegenen Ende der Hauptreaktortrommel (11) transportiert wird.

15. Verfahren nach einem der Ansprüche 12 bis 14, **dadurch gekennzeichnet, dass** die vom Prozess benötigte Luft, die vorzugsweise mit Sauerstoff angereichert ist, durch einen Luftzuführkopf (22) zugeführt wird.

16. Verfahren nach einem der Ansprüche 12 bis 15, **dadurch gekennzeichnet, dass** die Frischluft ein Trockner-Modul (25) zur Vortrocknung passiert.

17. Verfahren nach einem der Ansprüche 12 bis 16, **dadurch gekennzeichnet**, die feuchtigkeitshaltige, vom Prozess verbrauchte Luft mittels eines Absaugkopfs (14) abgesaugt wird.

18. Verfahren nach einem der Ansprüche 12 bis 17, **dadurch gekennzeichnet, dass** es zur kontinuierlichen aeroben Umwandlung organischer Substanz eingesetzt wird.
